# EUROPÄISCHE PATENTSCHRIFT

(11) **EP 1 271 117 B1**
(45) Veröffentlichungstag und Bekanntmachung des Hinweises auf die Patenterteilung: **09.07.2014**
(21) Anmeldenummer: 02022147.9
(22) Anmeldetag: 12.01.2000
(51) Int. Cl.: G01K 7/18, H01C 7/00, H01C 17/02

(54) **Platintemperatursensor**
Platinum temperature sensor
Capteur de température à platine

(30) Priorität: 14.01.1999 DE 19901184
(43) Veröffentlichungstag der Anmeldung: 02.01.2003
(62) Teilanmeldung aus: 00901094.3
(73) Patentinhaber: Sensata Technologies Bermuda Ltd, Hamilton HM 11 (BM)
(72) Erfinder: Zitzmann, Heinrich, Dr., 91207 Lauf an der Pegnitz (DE)
(74) Vertreter: Twelmeier, Ulrich

(56) Entgegenhaltungen:
- DE-A- 3 829 764
- DE-A- 4 445 243
- DE-C- 3 733 192

## Beschreibung

Die vorliegende Erfindung bezieht sich auf einen Platintemperatursensor und insbesondere auf einen Platintemperatursensor, bei dem ein Platindünnfilmwiderstand, der auf ein Keramiksubstrat aufgebracht ist, zur Temperaturerfassung verwendet wird.

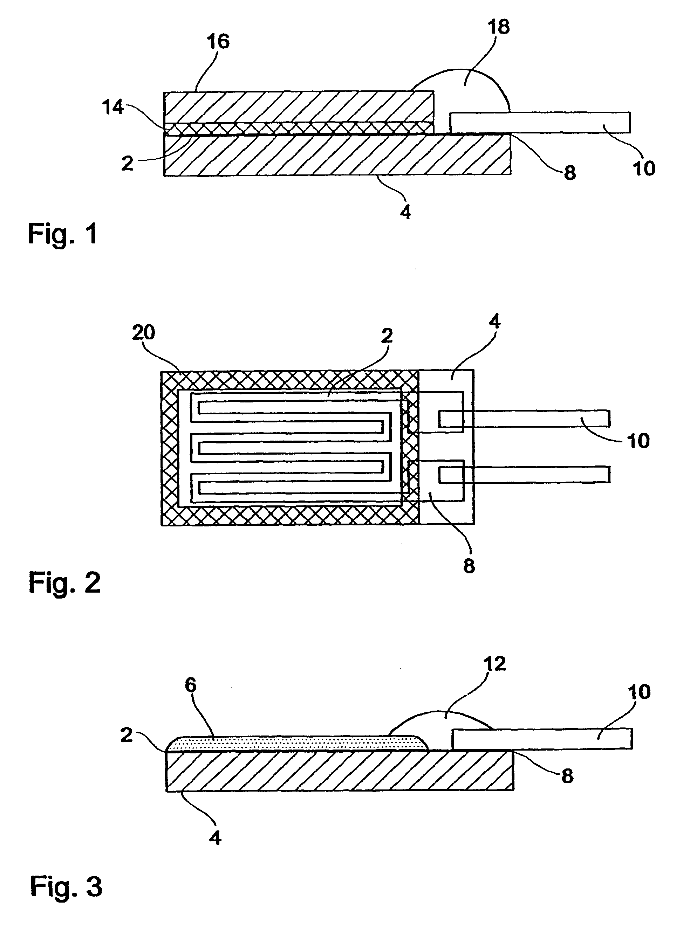

Ein bekannter Platintemperatursensor ist in Fig. 3 dargestellt. Bei diesem bekannten Platintemperatursensor ist ein Platindünnfilmwiderstand 2 auf ein Keramiksubstrat 4, das üblicherweise aus Aluminiumoxid Al₂O₃ besteht, aufgebracht. In dem Bereich, in dem der Platindünnfilmwiderstand 2 gebildet ist, ist auf der Oberfläche des Keramiksubstrats 4 eine Schutzglasur 6 vorgesehen. Die Platinschicht, in der der Platindünnfilmwiderstand 2 üblicherweise meanderförmig gebildet ist, ist ferner strukturiert, um Anschlußflächen 8 aufzuweisen, mit denen Anschlußdrähte 10 zur Entnahme des Sensorsignals elektrisch leitfähig verbunden sind. Zur Fixierung der Anschlußdrähte 10 ist eine Glasur 12 vorgesehen.

Der in Fig. 3 dargestellte Platintemperatursensor in Dünnschichttechnik ist in seinem Anwendungsbereich normalerweise auf 600°C beschränkt. Nach einer Ausführungsform für höhere Einsatztemperaturen, die bei über 1000°C liegen können, besteht jedoch bereits seit einigen Jahren ein steigendes Interesse. Auf dem Gebiet der Hochtemperaturfühler wurden deshalb beträchtliche Anstrengungen unternommen, um Platintemperaturfühler verfügbar zu machen, die für einen Einsatz in derart hohen Temperaturbereichen geeignet sind. Durch gezielte Auswahl der Zusammensetzung der Schutzglasur 6 konnten bereits zufriedenstellende Lösungen für einige Anwendungen gefunden werden, wohingegen in sehr anspruchsvollen Einsatzgebieten, beispielsweise bei speziellen Einsätzen im Kfz-Bereich, die Ergebnisse nicht alle Anforderungen erfüllen. Beispielsweise ist die Langzeitstabilität von Temperaturfühlern der oben beschriebenen Art insbesondere bei Beaufschlagung mit einem gewissen Meßstrom, der beispielsweise bei 5 mA liegen kann, bei den auftretenden hohen Temperaturen im Bereich von 800°C bis 1000°C nicht ausreichend gewährleistet, da die verwendeten Schutzglasuren bei diesen hohen Temperaturen durch den notwendigen Meßstrom elektrochemisch zersetzt werden können. Die dabei auftretende Materialwanderung beeinflußt die Eigenschaften des Platins negativ, so daß dadurch die Stabilität der Fühler und somit die Meßgenauigkeit beeinträchtigt wird.

Durch eine gezielte Auswahl der Zusammensetzung der Schutzglasuren konnten in einem gewissen Umfang Verbesserungen erreicht werden, wobei jedoch keine Schutzglasuren gefunden wurden, die bei Dauerbelastungen in einem Temperaturbereich von 1000°C oder darüber der elektrochemischen Zersetzung durch den Meßstrom widerstehen.

Aus dem Artikel "Fügen von Technischen Keramiken mit Keramik-Grünfolien" von M. Neuhäuser, u.a., cfi/Ber. DKG 72 (1995) Nr. 1-2, sind Verfahren zum Fügen von technischen Keramiken bekannt, bei denen die Keramik-Grünfolien verwendet werden, um zwei Keramikschichten miteinander zu verbinden. Voraussetzung für das dort beschriebene Fügeverfahren ist, daß die Sintertemperatur der Keramik-Grünfolie unter der Sintertemperatur der zu fügenden Keramik liegt.

Ein Temperatursensor, der eine Platinwiderstandsschicht aufweist, die auf ein Keramiksubstrat aufgebracht ist und durch eine Glasur eingekapselt ist, ist in der DE 7629727 U1 offenbart.

Aus der DE 37 33 192 C1 ist ein PTC-Temperaturfühler bekannt, bei dem ein mittels einer Platindickschichttechnik gebildeter Platinwiderstand zwischen zwei Keramik-Grünschichtfolien und einer interlaminaren Binderschicht angeordnet wird, woraufhin die beiden Folien unter Anwendung eines Drucks und einer erhöhten Temperatur zusammenlaminiert und daraufhin gesintert werden.

In der DE 4445243 A1 ist ein Temperaturfühler beschrieben, bei dem drei rohe Keramiksubstrate zusammenlaminiert, gepreßt und bei 1.600°C gebrannt werden, um ein einheitliches Stück zu bilden. Vor dem Laminieren wird dabei zwischen zwei der Keramiksubstrate ein Platinwiderstand angeordnet.

Die Aufgabe der vorliegenden Erfindung besteht darin, einen Platintemperatursensor zu schaffen, der auch bei Dauerbelastungen in einem hohen Temperaturbereich zuverlässige Meßergebnisse liefert.

Diese Aufgabe wird durch Platintemperatursensoren nach Anspruch 1 gelöst.

Bei dem erfindungsgemäßen Platintemperatursensor ist daher der strukturierte Platinfilm zum einen ausreichend gegen mechanische und chemische Umwelteinflüsse geschützt. Zum anderen liefert der erfindungsgemäße Platintemperatursensor auch bei Dauerbelastungen in einem hohen Temperaturbereich zuverlässige Meßergebnisse, da die oben beschriebenen nachteiligen Zersetzungserscheinungen bei dem erfindungsgemäßen Platinfilmtemperatursensor nicht auftreten.

Bei dem erfindungsgemäßen Platintemperatursensor ist die Verbindungsschicht auf eine Umrandungsfläche des Keramiksubstrats aufgebracht, so daß der Platindünnfilmwiderstand von der Verbindungsschicht umgeben ist. Ist die Verbindungsschicht nur auf der Umrandungsfläche vorgesehen, ist es bevorzugt, auf den seitlichen Kanten der sich ergebenden Schichtstruktur eine Versiegelungsschicht, die beispielsweise aus Glas bestehen kann, vorzusehen. Eine solche Schicht kann jedoch auch vorgesehen werden, wenn die Verbindungsschicht ganzflächig aufgebracht ist.

Bevorzugte Ausführungsbeispiele der vorliegenden Erfindung werden nachfolgend bezugnehmend auf die beiliegenden Zeichnungen näher erläutert. Es zeigen:
- Fig. 1:: eine schematische Querschnittansicht eines Platintemperatursensors, der nicht unter den Schutzbereich der Ansprüche 1 bis 5 fällt;
- Fig. 2:: eine schematische Draufsicht eines erfindungsgemäßen Platintemperatursensors; und
- Fig. 3:: eine schematische Querschnittansicht eines bekannten Platintemperatursensors.

Zunächst wird bezugnehmend auf Fig. 1 ein Platintemperatursensor näher beschrieben. Der Platintemperatursensor besitzt ein Keramiksubstrat 4, daß bei bevorzugten Ausführungsbeispielen aus Al₂O₃ besteht, auf das eine strukturierte Platinschicht aufgebracht ist, die eine Platinwiderstandsbahn 2 und Anschlußflächen 8 definiert. Mit den Anschlußflächen 8 kann ein Anschlußdraht 10 elektrisch leitfähig verbunden werden. Mittels einer Verbindungsschicht 14, die bei bevorzugten Ausführungsbeispielen ebenfalls aus Al₂O₃ besteht, ist auf die Oberfläche des Keramiksubstrats 4, auf der die Platinwiderstandsbahn vorgesehen ist, eine Keramikabdeckschicht 16, die bei bevorzugten Ausführungsbeispielen ebenfalls aus Al₂O₃ gebildet ist, aufgebracht. Ferner ist in Fig. 1 eine Glaskeramik 18 dargestellt, die zur Fixierung des Anschlußdrahts dient.

Es ist bevorzugt, für die Abdeckschicht 16 das gleiche Material zu verwenden, das für das Keramiksubstrat 4 verwendet ist. Jedoch kann auch ein ähnliches Material verwendet werden. Die Abdeckschicht 16 kann die gleiche Dicke aufweisen, wie die Keramikschicht oder eine geringere Dicke, beispielsweise 10 bis 20% dünner, solange durch die Dicke der Abdeckschicht eine ausreichende Schutzwirkung gegen widrige Umgebungseinflüsse erreicht werden kann. Die Verbindungsschicht kann eine geringe Dicke besitzen, da die Schutzwirkung für den Platinfilm gegen die äußere Atmosphäre durch die dickere Abdeckschicht 16 erreicht wird.

Zur Herstellung des Platintemperatursensors wird zunächst das gebrannte Keramiksubstrat 4, das bei bevorzugten Ausführungsbeispielen der vorliegenden Erfindung ein Al₂O₃-Substrat ist, mit der darauf vorgesehenen Platinwiderstandsbahn 2 bereitgestellt. Nachfolgend wird zumindest im Bereich der Platinwiderstandsbahn 2 eine sehr dünne Keramik-Grünschicht einer Dicke von beispielsweise 0,1 bis 0,2 mm aufgebracht. Vorzugsweise handelt es sich bei dieser Verbindungsschicht um eine Al₂O₃-Grünschicht. Nachfolgend wird auf die Grünschicht die gebrannte Abdeckschicht 16, vorzugsweise ebenfalls eine Al₂O₃-Schicht aufgebracht. Dieser Gesamtschichtaufbau wird dann bei sehr hohen Temperaturen unter einem zusätzlichen äußeren Druck, der beispielsweise durch eine zusätzliche Keramikplatte erzeugt werden kann, gebrannt. Durch diesen Brennvorgang werden die beiden Keramikplatten, d.h. das Keramiksubstrat 14 und die Abdeckschicht 16, mittels der Folie 14 fest miteinander verbunden. Somit wird der Platindünnfilmwiderstand 2 dicht gegen die äußere Atmosphäre verschlossen.

Somit gewährleistet der Platintemperatursensor einen sicheren Schutz des Platindünnfilmwiderstands gegen das Eindringen von Fremdmaterial aus der Umgebung auch in hohen Temperaturbereichen, wobei keine chemischen Zersetzungseinflüsse durch den zum Betreiben des Temperatursensors erforderlichen Meßstrom zu befürchten sind.

Es ist nicht möglich, die Keramikabdeckschicht mittels Siebdruck direkt auf das Keramiksubstrat aufzubringen, wie dies beispielsweise bei Verwendung von Glasuren als Schutzschicht durchgeführt wird. Wird Al₂O₃ als Abdeckschicht verwendet, kann diese Vorgehensweise nicht angewendet werden, da der Schmelzpunkt für Al₂O₃ viel zu hoch liegt, nämlich über dem Schmelzpunkt des Platins und überdies auch das Trägersubstrat schmelzen würde.

Auch wenn die gesamte Abdeckschicht als Grünschicht aufgebracht wird, wobei unter Grünschicht eine Keramik mit sich beim Brennvorgang verflüchtigenden Bindemitteln zu verstehen ist, ergeben sich Probleme, da diese Grünschicht beim Brennvorgang einer gewissen Schwindung unterliegt, wobei die Abdeckschicht aufgrund von Schrumpfungsrissen nicht die geforderte Dichtheit aufweisen würde. Die oben genannte Schwindung macht sich umso mehr bemerkbar, je dicker die Folie ist. Andererseits ist aber eine gewisse Dicke notwendig, im Bereich von 0,3 bis 0,5 mm, um bei den angesprochenen hohen Temperaturen von 800°C bis 1000°C oder darüber hinaus eine ausreichende Schutzwirkung gegen widrige Umgebungseinflüsse zu erreichen.

In Fig. 2 ist eine schematische Draufsicht eines erfindungsgemäßen Platintemperatursensors dargestellt. In Fig. 2 ist wiederum das Keramiksubstrat 4, das als Träger dient, und die auf demselben strukturierte Platinschicht, die einen Platindünnfilmwiderstand 2 und Anschlußflächen 8 definiert, gezeigt. Ferner sind zwei jeweils mit einer der Anschlußflächen 8 verbundene Anschlußdrähte 10 dargestellt. Bei dem in Fig. 2 dargestellten Ausführungsbeispiel ist jedoch die Verbindungsschicht 20 nicht ganzflächig auf die Oberfläche des Keramiksubstrats 4 und des Platindünnfilmwiderstands 2 aufgebracht, sondern lediglich in einem den Platindünnfilmwiderstand 2 umgebenden Randbereich. Bei diesem Ausführungsbeispiel ist der Platindünnfilmwiderstand durch die Verbindungsschicht nicht bedeckt. Mittels dieser, den Platindünnfilmwiderstand 2 umgebenden Verbindungsschicht 20 wird nunmehr eine Abdeckschicht (in Fig. 2 nicht gezeigt) mit dem Keramiksubstrat 4 verbunden, so daß wiederum der Platindünnfilmwiderstand 2 gegenüber der Umgebung abgedichtet eingekapselt ist. Bei diesem Ausführungsbeispiel ist es bevorzugt, auf den senkrechten äußeren Kanten, die durch die Schichtstruktur gebildet sind, eine zusätzliche Versiegelungsschicht vorzusehen, die beispielsweise aus Glas besteht.

Bei dem in Fig. 2 dargestellten Ausführungsbeispiel kann als Verbindungsschicht 20 entweder ebenfalls eine Al₂O₃-Folie verwendet werden. Erfindungsgemäß ist als Verbindungsschicht anstelle der Folie eine Schutzglasur zur abdichtenden Verbindung, d.h. Verschmelzung des Trägersubstrats mit der Abdeckfolie verwendet. Auch bei Verwendung der Schutzglasur als Verbindungsschicht 20 besitzt die stromführende Platinwiderstandsbahn 2 keinerlei Kontakt zu der Glasurschicht 20, so daß die oben beschriebenen Zersetzungserscheinungen in diesem Fall nicht auftreten. die Verwendung einer Glasur für die Verbindungsschicht 20 kann Vorteile bei der Herstellung bringen und ist bis 1000°C einsetzbar, wenn eine hochschmelzende Glasur mit einer Schmelztemperatur von mehr als 1.300°C verwendet wird.

Die vorliegende Erfindung schafft somit einen Platintemperatursensor, der auf der einen Seite einen sicheren Schutz des Platinfilmwiderstands vor äußeren Einflüssen liefert und zum anderen auch bei einer Dauerbelastung in hohen Temperaturbereichen keine Verschlechterung der Genauigkeit besitzt.

Der erfindungsgemäße Platintemperatursensor kann mit Ausnahme des Anbringens der Anschlußdrähte und des Fixierens derselben vorzugsweise im Waferverbund hergestellt werden, derart, daß aus einem Keramikwafer eine Mehrzahl von Platintemperatursensoren hergestellt werden. Nach dem Vereinzeln der einzelnen Platintemperatursensoren kann dann auf die jeweiligen senkrechten Schnittkanten die oben genannte Versiegelungsschicht aufgebracht werden.

## Patentansprüche

1. Platintemperatursensor mit folgenden Merkmalen:
einem Keramiksubstrat (4);
einem auf das Keramiksubstrat (4) aufgebrachten Platindünnfilmwiderstand (2);
einer Keramikabdeckschicht (16); und
einer Verbindungsschicht (20) aus einer Glasur, die in einem den Platindünnfilmwiderstand (2) umgebenden Randbereich auf das Keramiksubstrat (4) aufgebracht ist, so daß die Verbindungsschicht (20) den Platindünnfilmwiderstand (2) nicht bedeckt und durch die Verbindungsschicht (20) die Keramikabdeckschicht (16) derart mit dem Keramiksubstrat (4) verbunden ist, daß der Platindünnfilmwiderstand (2) gegenüber der Umgebung abgedichtet eingekapselt ist.

2. Platintemperatursensor nach Anspruch 1, bei dem das Keramiksubstrat (4) aus Al₂O₃ besteht.

3. Platintemperatursensor nach einem der Ansprüche 1 oder 2, bei dem die Keramikabdeckschicht (16) aus Al₂O₃ besteht.

4. Platintemperatursensor nach einem der Ansprüche 1 bis 3, bei dem auf die äußeren senkrechten Kanten der Schichtstruktur aus Keramiksubstrat (4), Verbindungsschicht (20) und Keramikabdeckschicht (16) eine Versiegelungsschicht aufgebracht ist.

5. Platintemperatursensor nach Anspruch 4, bei dem die Versiegelungsschicht aus Glas besteht.

## Claims

1. A platinum temperature sensor having the following features:
a ceramic substrate (4);
a platinum thin-film resistor (2) applied to the ceramic substrate (4) ;
a ceramic cover layer (16); and
a connecting layer (20) made of a glaze, which is applied to the ceramic substrate (4) in a border area surrounding the platinum thin-film resistor (2), such that the connecting layer (20) does not cover the platinum thin-film resistor (2) and the ceramic cover layer (16) is connected by the connecting layer (20) to the ceramic substrate (4) in such a way that the platinum thin-film resistor (2) is sealingly encapsulated with regard to the environment.

2. A platinum temperature sensor according to claim 1, wherein the ceramic substrate (4) consists of Al₂O₃.

3. A platinum temperature sensor according to one of claims 1 or 2, wherein the ceramic cover layer (16) consists of Al₂O₃.

4. A platinum temperature sensor according to one of claims 1 to 3, wherein a sealing layer is applied to the outer perpendicular edges of the layer structure consisting of ceramic substrate (4), connecting layer (20) and ceramic cover layer (16).

5. A platinum temperature sensor according to claim 4, wherein the sealing layer consists of glass.

## Revendications

1. Capteur de température à résistance de platine, avec les caractéristiques suivantes :
un substrat céramique (4) ;
une résistance de platine à couche mince (2) appliquée sur le substrat de céramique (4) ;
une couche de recouvrement en céramique (16) ; et
une couche de liaison (20) constituée de vernis et appliquée sur le substrat céramique (4), dans une région de bord entourant la résistance de platine à couche mince (2), de manière à ce que la couche de liaison (20) ne couvre pas résistance de platine à couche mince (2), et à ce que la couche de recouvrement en céramique (16) soit reliée au substrat céramique (4) par la couche de liaison (20) de façon à encapsuler hermétiquement la résistance de platine à couche mince (2) par rapport à l'environnement.

2. Capteur de température à résistance de platine selon la revendication 1, dans lequel le substrat céramique (4) est constitué d'Al₂O₃.

3. Capteur de température à résistance de platine selon l'une des revendications 1 à 2, dans lequel la couche de recouvrement en céramique (16) est constituée d'Al₂O₃.

4. Capteur de température à résistance de platine selon l'une des revendications 1 à 3, dans lequel une couche de scellage est appliquée sur les arêtes verticales extérieures de la structure en couches comprenant le substrat céramique (4), la couche de liaison (20) et la couche de recouvrement en céramique (16).

5. Capteur de température à résistance de platine selon la revendication 4, dans lequel la couche de scellage est constituée de verre.
